# EUROPEAN PATENT SPECIFICATION

(11) **EP 0 956 998 B1**
(45) Date of publication and mention of the grant of the patent: **23.04.2003**
(21) Application number: 99109520.9
(22) Date of filing: 12.05.1999
(51) Int. Cl.: B60Q 1/076

(54) **Position adjusting device for a vehicle headlamp**
Lageeinstellungsvorrichtung eines Kfz-Scheinwerfers
Dispositif d'ajustement de la position d'un phare de véhicule

(30) Priority: 12.05.1998 IT TO980401
(43) Date of publication of application: 17.11.1999
(73) Proprietor: Automotive Lighting Italia Spa, 10078 Venaria Reale (Torino) (IT)
(72) Inventor: Ressia, Alessio, 10073 Cirie' (IT); D'Alessandro, Domenico, 10122 Torino (IT)
(74) Representative: Eccetto, Mauro

(56) References cited:
- EP-A- 0 661 192
- EP-A- 0 716 954
- DE-C- 4 420 779

## Description

The present invention relates to a position adjusting device for a vehicle headlamp as described in EP-A-0 661 192 which shows the features of the preamble of claim 1.

Headlamps for vehicles are known in which an electrically actuated position correcting device is entirely housed within a main body of the headlamp: the moving member of the position corrector (typically a sliding pin with a spherical head) cooperates with the reflector of the headlamp causing it to tilt and therefore to vary its orientation; the reflector is normally connected at three points, one of which is formed by the point of action of the position corrector.

Headlamps are also known with automatic internal position correctors provided with further auxiliary adjustment systems that are manually controlled (for instance by means of threaded members) and which are needed, for instance, during the assembly of the headlamp on the vehicle in order to recover assembly tolerances or in the event of malfunction of the electrical system; according to these known solutions, the manual adjustment of the orientation of the reflector is carried out by acting separately on two separate adjustment members cooperating respectively with the two points of connection of the reflector that are not engaged by the automatic position corrector.

The point of connection on which the automatic position corrector acts is not in fact available for coupling with a further manual member and acts, during manual adjustment, as a fixed point: it is therefore necessary to act on two members (for instance two screws) disposed on separate axes in order manually to adjust the reflector.

The main drawback of the devices of the type described above is therefore that they require the operator, during manual adjustment of the orientation of the reflector, to act on two separate points of action; they are also relatively complex and costly to manufacture and assemble and require the use of two separate manual adjustment members disposed in different positions.

The object of the present invention is to provide a position adjusting device for a vehicle headlamp which is free from the above-mentioned drawbacks of known devices: an object of the invention is in particular to provide a device that includes an automatic position corrector which is, for instance, electrically actuated, and a manual adjustment system that is readily accessible by an operator and requires the operator to act on a single control member and which is simple and economic to produce and easy to assemble.

This object is achieved by the present invention, which relates to a position adjusting device for a vehicle headlamp comprising a support structure borne rigidly by a main body of the headlamp, a member sliding with respect to this support structure and adapted to cooperate with a reflector of the headlamp in order to vary the orientation of this reflector with respect to the main body, and first actuator means acting on this sliding member along a predetermined sliding axis in order to move the sliding member in translation with respect to the support structure along this predetermined sliding axis, second actuator means, separate and independent from the first actuator means, acting on the sliding member along the same sliding axis along which the first actuator means act, in order to move this sliding member in translation with respect to the support structure along this sliding axis, the sliding member being moved in translation along this sliding axis selectively by the first and second actuator means; wherein the first actuator means act on the sliding member by means of an intermediate member moving with respect to the support structure, the sliding member being provided, at a predetermined distance from a first axial end thereof, with a threaded portion which is inserted into a corresponding internally threaded seat of the intermediate member by means of a male-female coupling; characterized in that the intermediate member slides rigidly with the sliding member with respect to the support structure as a result of the action of the first actuator means and is fixed with respect to the support structure when the second actuator means are acting on the sliding member.

The position adjusting device of the invention therefore incorporates a traditional position corrector, for instance an automatic position corrector of an electrically actuated type that can be fully housed within the main body of the headlamp, with a manual adjustment system acting separately and independently from the automatic position corrector but along the same sliding axis as the latter: in this way, manual adjustment may be carried out by acting on a single adjustment member, making use of the same point of action as the automatic position corrector, with a smaller number of components (and therefore lower costs) and in a simpler and more rapid manner than with known solutions.

Further embodiments of the invention are defined in the dependent claims 2 to 10.

In the following a non-limiting embodiment of the invention is described with reference to the accompanying drawings, in which:
Fig. 1 is a view, partially in section, of a vehicle headlamp provided with an adjustment device of the invention;
Fig. 2 is a view in section through the adjustment device of Fig. 1, on an enlarged scale.

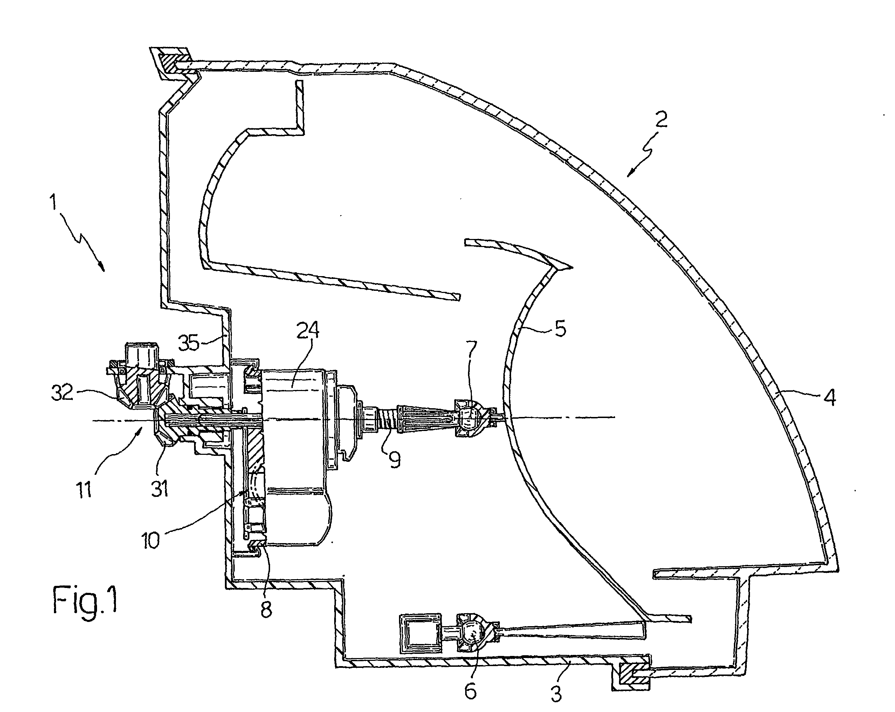

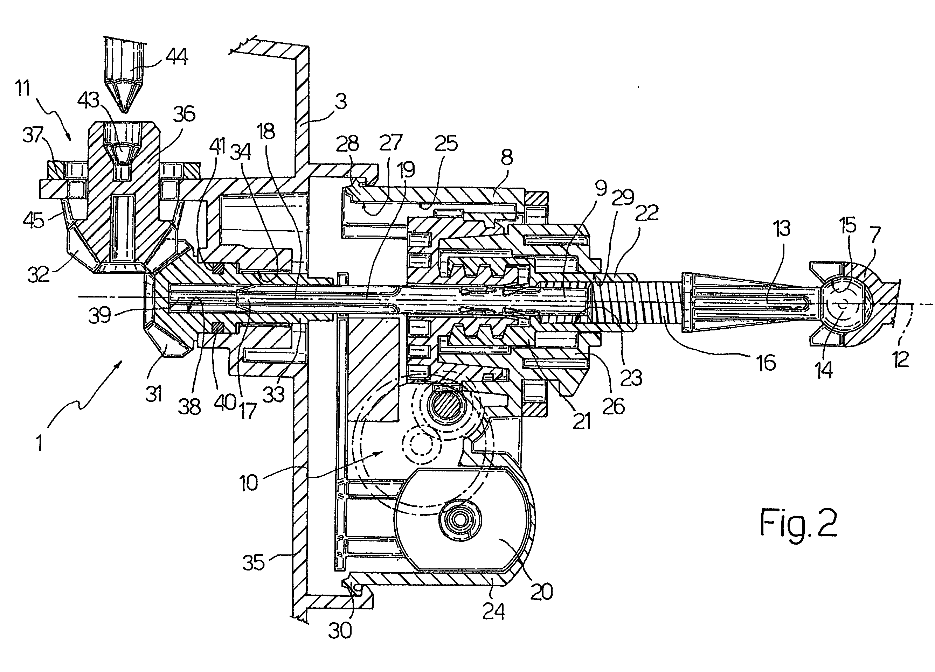

In Figs. 1 and 2, a position adjusting device for a vehicle headlamp 2 is shown overall by 1.

The headlamp 2, substantially of a known type and shown only diagrammatically in Fig. 1, comprises a main body 3 closed at the front by a transparent screen 4; the various lighting and adjustment members of the headlamp are housed within the main body 3 and in particular include a reflector 5 that can be oriented with respect to the main body 3 in order to vary the position of the light beam transmitted by the headlamp 2.

For this purpose, the reflector 5 can move with respect to the main body 3 of the headlamp 2 to which it is connected in a substantially known manner, for instance by means of at least two spherical joints 6 and 7: the orientation of the reflector 5 with respect to the main body 3 may be varied, as will be explained below, by keeping the spherical joint 6 fixed and displacing the spherical joint 7 by means of the position adjusting device 1, thereby causing the reflector 5 to tilt.

According to the invention, the position adjusting device 1 comprises a support structure 8, a sliding member 9 that can move with respect to the support structure 8 and is adapted to cooperate with the reflector 5 in order to vary its orientation, and two separate adjustment mechanisms 10, 11, both acting on the sliding member 9 in order to cause it to move in translation along a predetermined sliding axis.

In the non-limiting embodiment shown in Figs. 1 and 2, the sliding member is a substantially cylindrical pin sliding axially with respect to the support structure 8, and the predetermined sliding axis along which the adjustment mechanisms 10, 11 act substantially coincides with a longitudinal axis 12 of the pin 9.

The pin 9 is provided, at a first axial end 13, with a spherical head 14 for connection to a relative spherical seat 15 rigid with the reflector 5 and defining therewith the spherical joint 7. The pin 9 is further provided, at a predetermined distance from its axial end 13, with a threaded portion 16 of predetermined length and, at an axial end 17, opposite the axial end 13, with an end portion 18 having a substantially cross-shaped section having four axial grooves 19 spaced equally from one another and provided on an outer lateral surface of this end portion 18.

The adjustment mechanism 10 is an electrically actuated mechanism of a substantially known type which is shown only diagrammatically in Figs. 1 and 2 for simplicity: an electric motor 20, controlled from a remote position (for instance the passenger space of the vehicle) acts, by means of appropriate transmission members (known and not described in detail for simplicity), on an intermediate member 21 that can move with respect to the support structure 8.

The intermediate member 21 in particular comprises a tubular body 22 whose interior forms a threaded seat 23 into which the threaded portion 16 of the pin 9 is inserted over a predetermined section by means of a male-female coupling.

According to the preferred embodiment shown in Figs. 1 and 2, the support structure 8 is shaped such that it forms a container housing 24 inside which there is an open cavity 25 within which the adjustment mechanism 10 is housed; the container housing 24 has a front wall 26 that faces, in operation, the reflector 5 and a rear opening 27 bounded by a peripheral edge 28.

A through hole 29, into which the tubular body 22 of the intermediate member 21 is inserted in a sliding manner, is provided through the front wall 26.

The support structure 8 is further provided with means 30 for snap locking to the main body 3 of the headlamp 2, of known type and possibly provided with known sealing members.

The adjustment mechanism 11 of the position adjusting device 1 of the invention comprises a pair of conical toothed wheels 31, 32 having incident axes and engaging with one another; the conical toothed wheel 31 is rigidly connected to one end of a sleeve 33 inserted idly in a cylindrical housing 34 rigid with the main body 3 of the headlamp 2 and provided, for instance, through a base wall 35 of the main body 3 and disposed substantially in alignment with the through hole 29 of the container housing 24; the conical toothed wheel 32 is rigid with a hub 36, mounted in a rotary manner with respect to a support 37 rigid with the main body 3: in the non-limiting embodiment of Figs. 1 and 2, the support 37 extends in a snap-locking manner from the base wall 35 of the main body 3 externally to the latter, the hub 36 is disposed within the support 37 with a vertical axis and the conical toothed wheels 31, 32 engage with one another at right angles.

The conical toothed wheel 31 is connected, via the sleeve 33, in an angularly rigid and axially sliding manner with the end portion 18 of the pin 9: the end portion 18 is therefore inserted in an axially sliding manner into the sleeve 33 which is provided in turn with four longitudinal projections 39 which extend radially in a snap-locking manner from an inner lateral wall 38 thereof and engage the axial grooves 19 of the end portion 18 of the pin 9, making the latter angularly rigid with the sleeve 33.

The sleeve 33 to which the conical toothed wheel 31 is rigidly connected is preferably provided with sealing means adapted to cooperate in a fluid-tight manner with the cylindrical housing 34 into which the sleeve 33 is inserted in a rotary manner: for instance, as shown in Figs. 1 and 2, the sleeve 33 is provided with a sealing ring 40 of elastomeric material housed within an appropriate peripheral seat 41 provided on an outer lateral wall of the sleeve 33.

The hub 36 rigid with the conical toothed wheel 32 is in contrast provided with manual control means 43 enabling an operator to rotate the conical toothed wheel 32: for instance, as shown in Fig. 2, a tool 44 (for instance a screwdriver) may be inserted in the hub 36; when this tool is turned, the conical toothed wheel 32 and consequently the conical toothed wheel 31 coupled thereto are caused to rotate.

The conical toothed wheel 32 is further provided with anti-slip means 45, for instance elastic flanges of a substantially known type, which enable the conical toothed wheel 32 to be inserted through the support 37, but which prevent it from slipping.

During assembly, the support structure 8 forming the container housing 24, in which the adjustment mechanism 10, the pin 9 and the relative intermediate member 21 (which forms a male-female coupling with the pin 9) are previously housed, forms a pre-assembled unit that can be readily mounted on the main body 3 of the headlamp 2 by means of the snap- locking fastening means 30.

Once the support structure 8 is mounted on the main body 3, the cavity 25 within the container housing 24 is closed by the base wall 35 of the main body 3, ensuring that the components housed therein, in particular the adjustment mechanism 10, are protected against any external agents.

The conical toothed wheel 31 is then inserted into the relative cylindrical housing 34 via the sleeve 33 rigid therewith and then coupled to the pin 9 by inserting the end portion 18 of this pin into the sleeve 33. Lastly, the insertion of the conical toothed wheel 32 into the support 37 and its engagement with the conical toothed wheel 32 ensures that the entire position adjusting device 1 is axially locked.

In operation, the position adjusting device 1 offers two separate adjustment possibilities that can be carried out independently of one another by means of the adjustment mechanisms 10 and 11 which in substance form respective first and second actuator means acting on the sliding member (pin) 9 in order to move this pin in translation with respect to the support structure 8 along the sliding axis 12 which substantially coincides with a longitudinal axis of this sliding member 9.

The separate and independent first and second actuator means 10 and 11 therefore act on the sliding member along the same sliding axis 12 in order to move it in translation with respect to the support structure 8 along this axis: the sliding member 9 is therefore moved in translation along the sliding axis 12 selectively by the first actuator means 10 or by the second actuator means 11.

The first actuator means 10 are electrically actuated and housed in their entirety within the main body 3 of the headlamp 2, and operate in a completely analogous way to conventional automatic position correctors that are currently commercially available: in particular, they act on the sliding member 9 by means of the intermediate member 21 that can move with respect to the support structure 8 and is rigid with the sliding member 9, thereby causing this sliding member to move in translation along the sliding axis 12.

The second actuator means 11 are manually controlled and are disposed at least partially outside the main body 3 so that they are readily accessible by an operator when it is necessary manually to correct the position of the reflector 5. The operator, therefore, using the tool 44, acts on the conical coupling formed by the two conical toothed wheels 31, 32 thereby causing the pin 9 to rotate: the male-female coupling of the threaded portion 16 of the pin 9 with the threaded seat 23 of the intermediate member 21, which is fixed with respect to the support structure 8 and therefore the main body 3 of the headlamp 2, causes the pin 9 to move in translation along the sliding axis 12.

The intermediate member 21 therefore slides rigidly with the sliding member 9 with respect to the support structure 8 as a result of the action of the first actuator means 10, but is fixed with respect to the support structure 8 when the second actuator means 11 act on the sliding member 9.

In any case, the translation of the sliding member 9, connected to the reflector 5 by the spherical joint 7, varies the orientation of the reflector 5 with respect to the support structure 8 and the main body 3 of the headlamp 2.

It is evident that many modifications and variations may be made to the device described above provided that they do not depart from the scope of the claims.

## Claims

1. A position adjusting device (1) for a vehicle headlamp (2), comprising:
- a support structure (8) borne rigidly by a main body (3) of this headlamp (2),
- a member (9) sliding with respect to the support structure (8) and adapted to cooperate with a reflector (5) of the headlamp (2) in order to vary the orientation of this reflector (5) with respect to the main body (3),
- first actuator means (10) acting on the sliding member (9) along a predetermined sliding axis (12) in order to move the sliding member (9) in translation with respect to the support structure (8) along this predetermined sliding axis (12),
- second actuator means (11), separate and independent from the first actuator means (10), acting on the sliding member (9) along the same sliding axis (12) along which the first actuator means (10) act, in order to move this sliding member (9) in translation with respect to the support structure (8) along this sliding axis (12), the sliding member (9) being moved in translation along this sliding axis (12) selectively by the first and second actuator means (10, 11); wherein
the first actuator means (10) act on the sliding member (9) by means of an intermediate member (21) moving with respect to the support structure (8), the sliding member (9) being provided, at a predetermined distance from a first axial end (13) thereof, with a threaded portion (16) which is inserted into a corresponding internally threaded seat (23) of the intermediate member (21) by means of a male-female coupling; **characterized in that** the intermediate member (21) slides rigidly with the sliding member (9) with respect to the support structure (8) as a result of the action of the first actuator means (10) and is fixed with respect to the support structure (8) when the second actuator means (11) are acting on the sliding member (9).

2. A device as claimed in claim 1, **characterized in that** the first actuator means (10) are housed in their entirety in the main body (3) of the headlamp (2) and **in that** the second actuator means (11) are disposed at least partially outside the main body (3).

3. A device as claimed in claim 1 or 2, **characterized in that** the sliding member (9) is a pin sliding axially with respect to the support structure (8) and provided at a said first axial end (13) with a spherical head (14) for connection with a relative spherical seat (15) rigid with the reflector (5), the first and the second actuator means (10, 11) being adapted to move the pin (9) in translation along the sliding axis (12) which coincides with a longitudinal axis of this pin (9).

4. A device as claimed in claim 3, **characterized in that** the second actuator means (11) comprise first and second conical toothed wheels (31, 32) with incident axes and engaging with one another, the first conical toothed wheel (31) being rigidly connected to one end of a sleeve (33) inserted idly in a cylindrical housing (34) rigid with the main body (3) of the headlamp (2) and the second conical toothed wheel (32) being rigid with a hub (36) mounted in a rotary manner in a support (37) rigid with the main body (3), this hub (36) extending at least partially outside the main body (3).

5. A device as claimed in claim 4, **characterized in that** the first conical toothed wheel (31) is connected, via the sleeve (33), in an angularly rigid and axially sliding manner with an end portion (18) of the pin (9) disposed at a second axial end (17) of this pin (9) opposite the first axial end (13) provided with the spherical head (14), the end portion (18) of the pin (9) being inserted in a axially sliding manner into the sleeve (33) and being provided with means (19) for angular locking with respect to the sleeve (33).

6. A device as claimed in claim 5, **characterized in that** the means for the angular locking of the end portion (18) of the pin (9) with respect to the sleeve (33) comprise at least one axial groove (19) provided on an outer lateral surface of this end portion (18) of the pin (9) and at least one longitudinal projection (39) extending radially in a snap-locking manner from an inner lateral surface (38) of the sleeve (33) in order to engage at least this one axial groove (19).

7. A device as claimed in one of claims 4 to 6, **characterized in that** the support structure (8) has an open inner cavity (25) in which the first actuator means (10) are disposed, the support structure (8) further comprising snap-locking fastening means (30) for the main body (3) of the headlamp (2), the cavity (25) being closed by the base wall (35) of the main body (3) of the headlamp (2) when the support structure (8) is mounted in a snap-locking manner on the main body (3).

8. A device as claimed in claim 7, **characterized in that** the cylindrical housing (34) into which the sleeve (33) is idly inserted is obtained through the base wall (35) of the main body (3) of the headlamp (2), this sleeve being provided with sealing means (40) adapted to cooperate in a fluid-tight manner with the cylindrical housing (34).

9. A device as claimed in one of claims 4 to 8, **characterized in that** the hub (36) rigid with the second conical toothed wheel (32) is provided with manual control means (43) adapted to rotate this second conical toothed wheel (32), the second conical toothed wheel (32) being further provided with anti-slip means (45) which enable the second conical toothed wheel (32) to be inserted through the support (37) but prevent it from slipping out.

10. A device as claimed in one of claims 7 to 9, **characterized in that** the first actuator means (10) are electrically actuated actuator means controlled from a remote position, the support structure (8), in which the first actuator means (10) are housed, forming a pre-assembled unit that can be mounted on the main body (3) of the headlamp (2) by means of the snap-locking fastening means (30).

## Patentansprüche

1. Positionseinstellvorrichtung (1) für einen Fahrzeugscheinwerfer (2), die umfaßt:
- eine Tragstruktur (8), die durch einen Hauptkörper (3) dieses Scheinwerfers (2) starr unterstützt ist,
- ein Element (9), das in bezug auf die Tragstruktur (8) gleitet und so beschaffen ist, daß es mit einem Reflektor (5) des Scheinwerfers (2) zusammenwirkt, um die Orientierung dieses Reflektors (5) in bezug auf den Hauptkörper (3) zu ändern,
- erste Stellmittel (10), die auf das Gleitelement (9) längs einer vorgegebenen Gleitachse (12) wirken, um das Gleitelement (9) translatorisch in bezug auf die Tragstruktur (8) längs dieser vorgegebenen Gleitachse (12) zu bewegen,
- zweite Stellmittel (11), die von den ersten Stellmitteln (10) getrennt und unabhängig sind und auf das Gleitelement (9) längs derselben Gleitachse (12) wirken, längs derer die ersten Stellmittel (10) wirken, um dieses Gleitelement (9) translatorisch in bezug auf die Tragstruktur (8) längs dieser Gleitachse (12) zu bewegen, wobei das Gleitelement (9) translatorisch längs dieser Gleitachse (12) wahlweise durch die ersten oder die zweiten Stellmittel (10, 11) bewegt wird; wobei
die ersten Stellmittel (10) auf das Gleitelement (9) mittels eines Zwischenelements (21) wirken, das sich in bezug auf die Tragstruktur (8) bewegt, wobei das Gleitelement (9) in einem vorgegebenen Abstand von seinem ersten axialen Ende (13) mit einem Gewindeabschnitt (16) versehen ist, der in einen entsprechenden Innengewindesitz (23) des Zwischenelements (21) mittels einer Stecker-Buchsen-Kopplung eingeschoben ist; **dadurch gekennzeichnet, daß** das Zwischenelement (21) starr mit dem Gleitelement (9) in bezug auf die Tragstruktur (8) als Folge der Wirkung der ersten Stellmittel (10) gleitet und in bezug auf die Tragstruktur (8) fest ist, wenn die zweiten Stellmittel (11) auf das Gleitelement (9) wirken.

2. Vorrichtung nach Anspruch 1, **dadurch gekennzeichnet, daß** die ersten Aktuatormittel (10) vollständig im Hauptkörper (3) des Scheinwerfers (2) untergebracht sind und daß die zweiten Stellmittel (11) wenigstens teilweise außerhalb des Hauptkörpers (3) angeordnet sind.

3. Vorrichtung nach Anspruch 1 oder 2, **dadurch gekennzeichnet, daß** das Gleitelement (9) ein Stiff ist, der in bezug auf die Tragstruktur (8) axial gleitet und an dem ersten axialen Ende (13) mit einem kugelförmigen Kopf (14) versehen ist, der eine Verbindung mit einem mit dem Reflektor (5) starr verbundenen relativen kugelförmigen Sitz (15) herstellt, wobei die ersten und die zweiten Stellmittel (10, 11) so beschaffen sind, daß sie den Stift (9) translatorisch längs der Gleitachse (12) bewegen, die mit der Längsachse dieses Stifts (9) übereinstimmt.

4. Vorrichtung nach Anspruch 3, **dadurch gekennzeichnet, daß** die zweiten Stellmittel (11) ein erstes und ein zweites konisches Zahnrad (31, 32) umfassen, die übereinstimmende Achsen besitzen und in gegenseitigem Eingriff sind, wobei das erste konische Zahnrad (31) mit einem Ende einer Hülse (33) starr verbunden ist, die mit Spiel in ein mit dem Hauptkörper (3) des Scheinwerfers (2) starr verbundenes zylindrisches Gehäuse (34) eingeschoben ist, und das zweite konische Zahnrad (32) mit einer Nabe (36) starr verbunden ist, die in drehbarer Weise in einem Träger (37) angebracht ist, der mit dem Hauptkörper (3) starr verbunden ist, wobei diese Nabe (36) wenigstens teilweise außerhalb des Hauptkörpers (3) verläuft.

5. Vorrichtung nach Anspruch 4, **dadurch gekennzeichnet, daß** das erste konische Zahnrad (31) über die Hülse (33) in Winkelrichtung starr und in axialer Richtung gleitend mit einem Endabschnitt (18) des Stifts (9) verbunden ist, der an einem zweiten axialen Ende (17) dieses Stifts (9) gegenüber dem ersten axialen Ende (13), das mit dem kugelförmigen Kopf (14) versehen ist, angeordnet ist, wobei der Endabschnitt (18) des Stifts (9) axial gleitend in die Hülse (33) eingeschoben ist und mit Mitteln (19) für eine Blockierung in Winkelrichtung in bezug auf die Hülse (33) versehen ist.

6. Vorrichtung nach Anspruch 5, **dadurch gekennzeichnet, daß** die Mittel für die Blockierung des Endabschnitts (18) des Stifts (9) in Winkelrichtung in bezug auf die Hülse (33) wenigstens eine axiale Nut (19) umfassen, die an einer äußeren seitlichen Oberfläche dieses Endabschnitts (18) des Stifts vorgesehen ist, und wenigstens einen longitudinalen Vorsprung (39) umfassen, der sich durch Einrastverriegelung von einer inneren seitlichen Oberfläche (38) der Hülse (33) radial erstreckt, um mit der wenigstens einen axialen Nut (19) in Eingriff zu gelangen.

7. Vorrichtung nach einem der Ansprüche 4 bis 6, **dadurch gekennzeichnet, daß** die Tragstruktur (8) einen offenen inneren Hohlraum (25) besitzt, in dem die ersten Stellmittel (10) angeordnet sind, wobei die Tragstruktur (8) ferner Einrastverriegelungs-Befestigungsmittel (30) für den Hauptkörper (3) des Scheinwerfers (2) umfassen, wobei der Hohlraum (25) durch die Grundwand (35) des Hauptkörpers (3) des Scheinwerfers (2) verschlossen ist, wenn die Tragstruktur (8) durch Einrastverriegelung an dem Hauptkörper (3) angebracht ist.

8. Vorrichtung nach Anspruch 7, **dadurch gekennzeichnet, daß** das zylindrische Gehäuse (34), in das die Hülse (33) mit Spiel eingeschoben ist, durch die Grundwand (35) des Hauptkörpers (3) des Scheinwerfers (2) erhalten wird, wobei diese Hülse mit Dichtungsmitteln (40) versehen ist, die so beschaffen sind, daß sie fluiddicht mit dem zylindrischen Gehäuse (34) zusammenwirken.

9. Vorrichtung nach einem der Ansprüche 4 bis 8, **dadurch gekennzeichnet, daß** die mit dem zweiten konischen Zahnrad (32) starr verbundene Nabe (36) mit manuellen Steuermitteln (43) versehen ist, die so beschaffen sind, daß sie dieses zweite konische Zahnrad (32) drehen, wobei das zweite konische Zahnrad (32) femer mit Gleitverhinderungsmitteln (45) versehen ist, die ein Einschieben des zweiten konischen Zahnrades (32) in den Träger (37) ermöglichen, jedoch sein Herausgleiten verhindern.

10. Vorrichtung nach einem der Ansprüche 7 bis 9, **dadurch gekennzeichnet, daß** die ersten Stellmittel (10) elektrisch betätigte Stellmittel sind, die aus einer entfernten Position gesteuert werden, wobei die Tragstruktur (8), in der die ersten Stellmittel (10) untergebracht sind, eine vormontierte Einheit bildet, die an dem Hauptkörper (3) des Scheinwerfers (2) mittels der Einrastverriegelungs-Befestigungsmittel (30) angebracht werden kann.

## Revendications

1. Dispositif d'ajustement de position (1) pour un phare de véhicule (2), comprenant :
- une structure de support (8) supportée de manière rigide par un corps principal (3) de ce phare (2),
- un élément (9) glissant par rapport à la structure de support (8) et adapté pour coopérer avec un réflecteur (5) du phare (2) afin de faire varier l'orientation de ce réflecteur (5) par rapport au corps principal (3),
- des premiers moyens actionneurs (10) agissant sur l'élément de glissement (9) suivant un axe de glissement prédéterminé (12) afin de déplacer l'élément de glissement (9) en translation par rapport à la structure de support (8) suivant cet axe de glissement prédéterminé (12),
- des seconds moyens actionneurs (11) séparés et indépendants des premiers moyens actionneurs (10), agissant sur l'élément de glissement (9) suivant le même axe de glissement (12) suivant lequel les premiers moyens actionneurs (10) agissent, afin de déplacer cet élément de glissement (9) en translation par rapport à la structure de support (8) suivant cet axe de glissement (12), l'élément de glissement (9) étant déplacé en translation suivant cet axe de glissement (12), de manière sélective, par les premiers et seconds moyens actionneurs (10, 11) ; dans lequel
les premiers moyens actionneurs (10) agissent sur l'élément de glissement (9) au moyen d'un élément intermédiaire (21) se déplaçant par rapport à la structure de support (8), l'élément de glissement (9) étant pourvu, à une distance prédéterminée d'une première extrémité axiale (13), d'une partie filetée (16) qui est insérée dans un siège correspondant fileté de manière interne (23) de l'élément intermédiaire (21) au moyen d'un couplage mâle-femelle ; **caractérisé en ce que** l'élément intermédiaire (21) glisse de manière rigide avec l'élément de glissement (9) par rapport à la structure de support (8) à la suite de l'action des premiers moyens actionneurs (10) et est fixé par rapport à la structure du support (8) lorsque les seconds moyens actionneurs (11) agissent sur l'élément de glissement (9).

2. Dispositif selon la revendication 1, **caractérisé en ce que** les premiers moyens actionneurs (10) sont logés dans leur intégralité dans le corps principal (3) du phare (2) et **en ce que** les seconds moyens actionneurs (11) sont disposés au moins partiellement à l'extérieur du corps principal (3).

3. Dispositif selon la revendication 1 ou 2, **caractérisé en ce que** l'élément de glissement (9) est une broche glissant axialement par rapport à la structure de support (8) et est pourvu au niveau de ladite première extrémité axiale (13) d'une tête sphérique (14) pour raccord avec un siège sphérique relatif (15) rigide avec le réflecteur (5), les premiers et seconds moyens actionneurs (10, 11) étant adaptés pour déplacer la broche (9) en translation suivant l'axe de glissement (12) qui coïncide avec un axe longitudinal de cette broche (9).

4. Dispositif selon la revendication 3, **caractérisé en ce que** les seconds moyens actionneurs (11) comprennent des première et seconde roues dentées coniques (31, 32) avec des axes incidents et se mettant en prise l'une avec l'autre, la première roue dentée conique (31) étant raccordée de manière rigide à une extrémité d'un manchon (33) inséré sans effort dans un logement cylindrique (34) rigide avec le corps principal (3) du phare (2) et la seconde roue dentée conique (32) étant rigide avec un moyeu (36) monté de manière rotative dans un support (37) rigide avec le corps principal (3), ce moyeu (36) s'étendant au moins partiellement à l'extérieur du corps principal (3).

5. Dispositif selon la revendication 4, **caractérisé en ce que** la première roue dentée conique (31) est raccordée, via le manchon (33), de manière angulairement rigide et axialement glissante avec une partie d'extrémité (18) de la broche (9) disposée au niveau d'une seconde extrémité axiale (17) de cette broche (9) opposée à la première extrémité axiale (13) pourvue de la tête sphérique (14), la partie d'extrémité (18) de la broche (9) étant insérée de manière axialement glissante dans le manchon (33) et étant pourvue de moyens (19) pour un blocage angulaire par rapport au manchon (33).

6. Dispositif selon la revendication 5, **caractérisé en ce que** les moyens destinés au blocage angulaire de la partie d'extrémité (18) de la broche (9) par rapport au manchon (33) comprennent au moins une rainure axiale (19) disposée sur une surface latérale externe de cette partie d'extrémité (18) de la broche (9) et au moins une saillie longitudinale (39) s'étendant radialement d'une manière bloquante par encliquetage à partir d'une surface latérale interne (38) du manchon (33) afin de mettre en prise au moins cette rainure axiale (19).

7. Dispositif selon l'une quelconque des revendications 4 à 6, **caractérisé en ce que** la structure de support (8) comporte une cavité interne ouverte (25) dans laquelle les premiers moyens actionneurs (10) sont disposés, la structure de support (8) comprenant en outre des moyens d'attache de blocage par encliquetage (30) pour le corps principal (3) du phare (2), la cavité (25) étant fermée par la paroi de base (35) du corps principal (3) du phare (2) lorsque la structure de support (8) est montée d'une manière bloquante par encliquetage sur le corps principal (3).

8. Dispositif selon la revendication 7, **caractérisé en ce que** le logement cylindrique (34) dans lequel le manchon (33) est inséré sans effort est obtenu à travers la paroi de base (35) du corps principal (3) du phare (2), ce manchon étant pourvu d'un moyen de fermeture (40) adapté pour coopérer d'une manière étanche au fluide avec le logement cylindrique (34).

9. Dispositif selon l'une quelconque des revendications 4 à 8, **caractérisé en ce que** le moyeu (36) rigide avec la seconde roue dentée conique (32) est pourvu d'un moyen de commande manuel (43) adapté pour mettre en rotation cette seconde roue dentée conique (32), la seconde roue dentée conique (32) étant en outre pourvue de moyens anti-glissement (45) qui permettent à la seconde roue dentée conique (32) d'être insérée à travers le support (37) mais l'empêchent d'en sortir par glissement.

10. Dispositif selon l'une quelconque des revendications 7 à 9, **caractérisé en ce que** les premiers moyens actionneurs (10) sont des moyens actionneurs électriquement actionnés commandés à partir d'une position éloignée, la structure de support (8), dans laquelle les premiers moyens actionneurs (10) sont logés, formant une unité pré-assemblée qui peut être montée sur le corps principal (3) du phare (2) au moyen des moyens d'attache de blocage par encliquetage (30).
